# EUROPÄISCHE PATENTSCHRIFT

(11) **EP 1 067 387 B1**
(45) Veröffentlichungstag und Bekanntmachung des Hinweises auf die Patenterteilung: **08.09.2004**
(21) Anmeldenummer: 00112274.6
(22) Anmeldetag: 08.06.2000
(51) Int. Cl.: G01P 1/02, H01R 13/639, F16B 41/00, F16H 61/00

(54) **Plombe für einen Drehwertgeber**
Seal for angular speed sensor
Plomb pour un capteur de vitesse angulaire

(30) Priorität: 07.07.1999 DE 29911835 U
(43) Veröffentlichungstag der Anmeldung: 10.01.2001
(73) Patentinhaber: SIEMENS AKTIENGESELLSCHAFT, 80333 München (DE)
(72) Erfinder: Modest, Otmar, Ing., 78078 Niedereschach (DE); Plankenhorn, Horst, Dipl.-Ing., 78048 Villingen-Schwenningen (DE)

(56) Entgegenhaltungen:
- EP-A- 0 324 104
- DE-U- 29 721 694

## Beschreibung

Die Erfindung betrifft eine Plombe für einen Drehwertgeber mit einem im wesentlichen stabförmigen Schutzgehäuse, an welchem für ein Anbringen des Drehwertgebers am Getriebegehäuse eines Fahrzeuges eine Flanschfläche und Schraubverbindungsmittel ausgebildet sind, wobei die Flanschfläche das Schutzgehäuse in einen Sensorabschnitt und einen Sockelabschnitt teilt und der Sockelabschnitt mit einem dem Ansetzen eines Schraubwerkzeuges dienenden, gegenüber der Flanschfläche abgesetzten Sechskant versehen ist.

Bei einem derartigen, durch Einschrauben am Meßort befestigbaren Drehwertgeber ist üblicherweise mit dem Schutzgehäuse eine Steckerfassung unlösbar verbunden. In diesem Falle erfolgt die Meßwertübertragung beispielsweise zu einem Fahrtschreiber mittels eines mit einem Stecker versehenen mehradrigen Kabels, welches auch Leitungen zur Energieversorgung des Drehwertgebers umfaßt und welches mittels einer Überwurfmutter lösbar an der Steckerfassung befestigt wird.

Da im Zusammenhang mit Fahrtschreibern stets die Gefahr der Manipulation der Meßwerte besteht, um beispielsweise die Einhaltung der gesetzlich vorgeschriebenen Ruhezeiten vorzutäuschen oder einen Geschwindigkeitsverlauf unterhalb der tatsächlich gefahrenen Geschwindigkeit zu simulieren, sind, da Manipulationen nicht grundsätzlich verhindert werden können, bei der oben geschilderten Konstellation der Meßwertübertragungsmittel verschiedene Maßnahmen üblich, mit denen Veränderungen an den Meßwertübertragungsmitteln nachgewiesen und Eingriffe erschwert werden können. Das heißt, dem Kabel ist ein gepanzerter Schutzschlauch zugeordnet; die Überwurfmutter und der Drehwertgeber werden jeweils mittels eines mit einer Bleiplombe festlegbaren Plombendrahtes gesichert.

Aus DE-U-297 21 694 ist eine Plombierung mit zwei Hülsen bekannt, welche mit Rastmitteln miteinander verbunden werden.

Durch die Anwendung neuerer Übertragungsverfahren, beispielsweise eines Verfahrens, bei dem durch Übertragung der Meßwerte in der üblichen Weise und der zusätzlichen Übertragung eines aus den Meßwerten gebildeten verschlüsselten Datenwortes, wobei im Fahrtschreiber eine Prüfung auf Unverfälschtheit der innerhalb eines definierten Zeitraums übertragenen Meßwertimpulse vorgenommen wird, läßt sich die Anwendung bisher bekannter Manipulationspraktiken mit hoher Wahrscheinlichkeit nachweisen, so daß bezüglich des Fertigungs- und Montageaufwandes eine erhebliche Reduzierung dadurch gegeben ist, daß auf die Plombierung der Überwurfmutter und die Verwendung des gepanzerten Schutzschlauches verzichtet werden kann.

Mit dem genannten Übertragungsverfahren ist jedoch nicht nachweisbar, daß bei abgehängter Fahrzeugbatterie der Drehwertgeber teilweise herausgedreht oder vom Einbauort entfernt worden ist, wobei die Meßwert-Übertragungsstrecke geschlossen bleibt oder nachfolgend wieder geschlossen wird und mittels eines mit dem Drehwertgeber verbindbaren Fahrtsimulators eine ordnungsgemäße Funktion und die Einhaltung gesetzlicher Vorgaben vorgetäuscht wurde. Das heißt, der Drehwertgeber beziehungsweise dessen Schutzgehäuse müssen weiterhin plombiert werden, wobei bei dem üblichen Plombieren mittels Plombendraht und Bleiplombe, abgesehen von der erforderlichen Sorgfalt, beim Fädeln des Plombendrahtes durch die am Getriebegehäuse und am Schutzgehäuse des Drehwertgebers vorgesehenen Ösen und dem Hantieren mit einer Plombierzange in vielen Einbausituationen erhebliche Behinderungen bestehen und somit ein hoher Montageaufwand in Kauf zu nehmen ist.

Aufgabe der vorliegenden Erfindung war es somit, einen gattungsgemäßen Drehwertgeber an seinem Einbauort mit möglichst geringem Aufwand und zuverlässiger Plombierfunktion zu plombieren.

Die Lösung der gestellten Aufgabe beschreibt der Anspruch 1. Weitere vorteilhafte Ausgestaltungen der Erfindung sind in den Unteransprüchen genannt.

Der entscheidende Vorteil der Erfindung ist darin zu sehen, daß die als Sechskanthülse ausgebildete Plombe auf das Schutzgehäuse des Drehwertgebers in axialer Richtung aufgesteckt werden kann und an dem Sechskant verrastet. Das heißt, es ist nur ein Bauteil erforderlich, welches werkzeuglos montierbar ist, wobei beim Montieren eine taktile, gegebenenfalls auch akustische Rückmeldung bezüglich des ordnungsgemäßen Sitzes der Plombe auf dem Schutzgehäuse erfolgt. Dabei ist die Plombe so gestaltet, daß sie einen weitgehend spielfreien beziehungsweise einen eine gewisse Grundspannung aufweisenden Formschluß mit dem Sechskant bildet und somit ein beschädigungsfreies Entfernen der Plombe durch Aufspreizen praktisch ausgeschlossen ist.

Andererseits bleibt die aus Kunststoff, beispielsweise aus einem hochtemperaturbeständigen Polyetherimid hergestellte Plombe beim Versuch den Drehwertgeber mittels eines üblichen Werkzeuges, einem Steckschlüssel oder Gabelschlüssel zu lösen, aufgrund des extrem hohen Anzugsmomentes, mit dem der Drehwertgeber üblicherweise befestigt ist, nicht unbeschädigt. Das im folgenden beschriebene Ausführungsbeispiel zeigt, wie die Plombe zusätzlich ausgestaltet werden kann, daß sie beim Ansetzen eines herkömmlichen Werkzeugs mit Sicherheit beschädigt wird und die Herstellung eines beispielsweise zangenartigen Spezialwerkzeugs aussichtslos ist.

Im folgenden sei die Erfindung anhand von Zeichnungen näher erläutert. Es zeigen:
- Figur 1: Ansichten der am Einbauort miteinander zu verbindenden Bauteile eines Drehwertgebers in ihrer Montagefolge,
- Figur 2: eine Draufsicht der erfindungsgemäßen Plombe in Achsrichtung,
- Figur 3: einen Schnitt gemäß der Schnittlinie A - A in Figur 2,

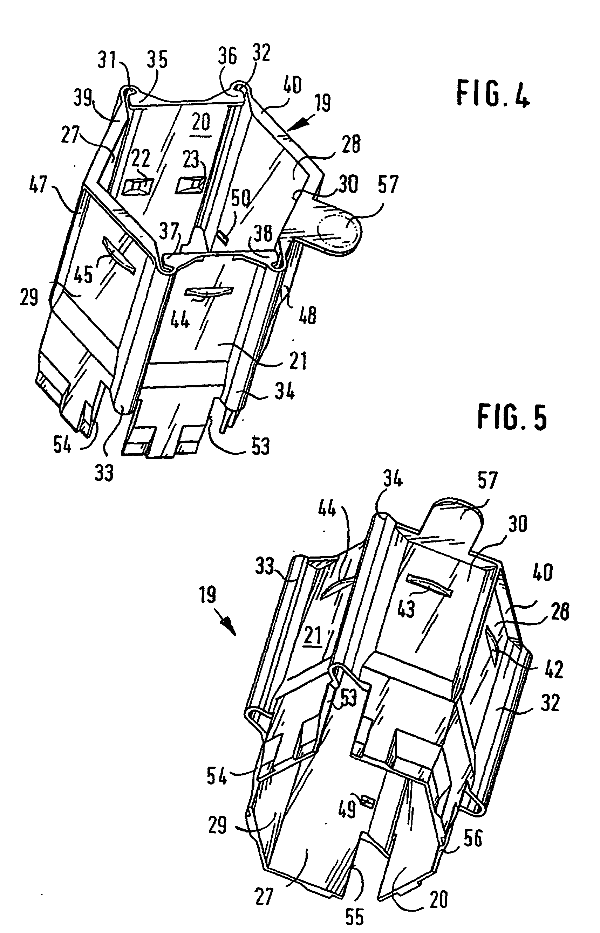

- Figur 4: eine perspektivische Darstellung der Plombe mit einer Sicht auf die von der Flanschfläche des Schutzgehäuses abgewandten Stirnfläche,
- Figur 5: eine perspektivische Darstellung der Plombe mit einer Sicht auf die der Flanschfläche des Schutzgehäuses zugewandten Stirnfläche,

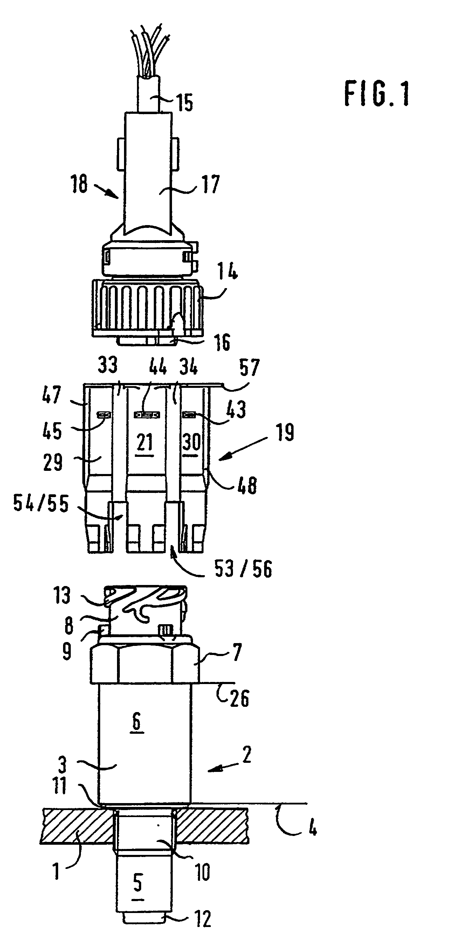

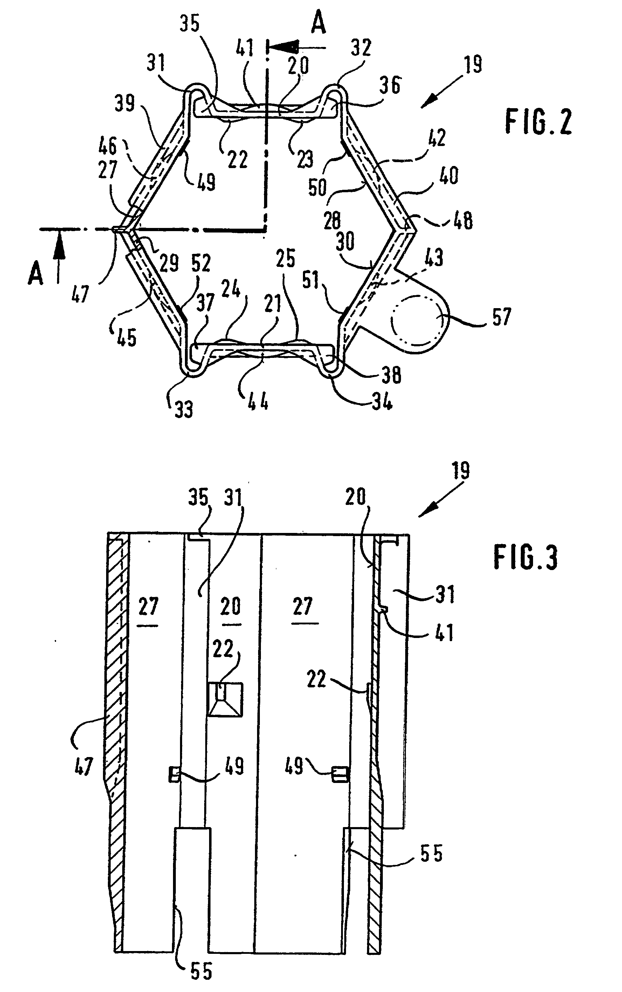

Die Übersichtsdarstellung, Figur 1, zeigt einen in ein Wandelement 1 eines Getriebegehäuses eingeschraubten Drehwertgeber 2, dessen Schutzgehäuse 3 gestuft ausgebildet ist. Das heißt, eine Flanschfläche 4 teilt das Schutzgehäuse 3 in einen im eingebauten Zustand des Drehwertgebers 2 in das Getriebegehäuse hineinragenden Sensorabschnitt 5 und einen außerhalb des Getriebegehäuses befindlichen Sockelabschnitt 6. An Letzterem ist ein Sechskant 7 ausgebildet und eine Steckerfassung 8 beispielsweise durch Anbördeln befestigt, wobei mehrere Nasen, von denen eine mit 9 bezeichnet ist als Verdrehsicherung dienen. Mit 10 ist ein Gewinde bezeichnet, mittels dessen der Drehwertgeber 2 im Wandelement 1 üblicherweise unter Verwendung einer Zwischenlegscheibe 11 befestigt ist. Das Bezugszeichen 12 bezeichnet eine stirnseitig dem Sensorabschnitt 5 zugeordnete nichtmagnetische Kappe, die die Meßmittel, beispielsweise eine Hallgenerator/Permanentmagnet-Kombination, abdeckt. An der Steckerfassung 8 ausgebildete Renkverbindungsstrukturen 13 dienen in an sich bekannter Weise dem Befestigen einer Überwurfmutter 14, mit welcher ein ein mehradriges Kabel 15 abschließender Stecker 16 in der Steckerfassung 8 des Drehwertgebers 2 festgehalten wird. Das mit der Figur 1 dargestellte Ausführungsbeispiel weist zusätzlich ein der Zugentlastung dienendes Klemmteil 17 auf, das beispielsweise zweischalig ausgebildet ist und nach dem Verrasten der beiden Schalen einerseits das Kabel 15 festspannt andererseits einen am Stecker 16 ausgebildeten Bund übergreift. Das heißt, mit dem Drehwertgeber 2 ist eine vormontierbare Baugruppe 18, bestehend aus dem mit dem Stecker 16 verbundenen Kabel 15, der lose auf dem Stecker 16 gehalterten Überwurfmutter 14 und dem nicht zwingend erforderlichen Klemmteil 17 verbindbar. Zuvor ist jedoch die Plombe 19 auf den Sockelabschnitt 6 axial aufzusetzen, wobei die Plombe 19 mit dem Sockelabschnitt 6 verrastet. Dabei greifen an gegenüberliegenden Wandelementen 20, 21 der als Sechskanthülse ausgebildeten Plombe 19 angeformte Rastelemente 22, 23, 24 und 25 hinter der in Richtung des Sensorabschnitts 5 weisenden Stirnfläche 26 des Sechskants 7 ein. Um dies bei der in bezug auf den Sechskant 7 formschlüssig ausgebildeten Plombe 19 zu ermöglichen, ist die Plombe 19 federungsfähig ausgestaltet. Dabei stehen, wie vorzugsweise aus Figur 2 ersichtlich ist, die den Wandelementen 20, 21 benachbarten Wandelemente 27, 28 und 29, 30 über nach außen gewölbte Übergangsbereiche 31, 32, 33, 34 miteinander in Verbindung. Die Übergangsbereiche 31, 32, 33, 34 sind stirnseitig mittels Lappen 35, 36, 37, 38 abgedeckt, die jeweils einen Eingriffsschutz bilden beziehungsweise einem Eingriffsnachweis bezüglich der durch die gewölbten Übergangsbereiche 31, 32, 33, 34 geschaffenen, nicht näher bezeichneten Hohlräume dienen. In gleicher Weise verhindert, wenn er nicht beschädigt worden soll, ein an der Plombe 19 wenigstens teilweise umlaufender Kragen beziehungsweise ein zweiteiliger Kragen 39, 40 die Anwendung eines mit Freisparungen für die Übergangsbereiche 31, 32, 33, 34 versehenen Steckschlüssels um die Schraubverbindung des Drehwertgebers 2 zu lösen.

Hindernisse bezüglich des Ansetzens eines Werkzeuges beziehungsweise Erschwernisse im Hinblick auf die Herstellung eines beispielsweise zangenartigen Spezialwerkzeugs bilden an den Wandelementen 27, 28, 29, 30 ausgebildete, nach außen weisende zungenförmige Vorsprünge 41, 42, 43, 44, 45, 46 sowie an den Verschneidungskanten der nicht federungsfähig miteinander verbundenen Wandelemente 27, 29 sowie 28, 30 vorgesehene Rippen 47, 48. Selbstverständlich lassen sich an den Wandelementen 20, 21, 27, 28, 29, 30 mehrere und gegebenenfalls unterschiedlich gestaltete Vorsprünge ausbilden, um die Herstellung eines für Manipulationszwecke vorgesehenen Werkzeugs zu erschweren, beziehungsweise um die Auflagefläche eines derartigen Werkzeugs so weit zu verringern, daß die Flächenpressung, die aufgrund des für ein Lösen des Drehwertgebers 2 erforderlichen hohen Drehmoments entsteht, so groß ist, daß eine Deformation der Auflagefläche des betreffenden Werkzeuges erfolgt und auf diese Weise ein Manipulationsversuch nachweisbar ist. Sekundäre Rastelemente 49, 50, 51, 52, die gegenüber den Rastelementen 22, 23, 24, 25 axial versetzt und beim ordnungsgemäßen Sitz der Plombe 19 auf dem Drehwertgeber 2 funktionslos sind stellen eine zusätzliche Maßnahme dar, die ein beschädigungsfreies axiales Abziehen der Plombe 19 verhindert. Sie treten dann in Funktion, wenn es unter Ausnutzung von Spiel und einer gewissen elastischen Verformbarkeit gelungen wäre, die sozusagen primären Rastelemente 22, 23, 24, 25 ohne Beschädigung der Plombe 19 außer Eingriff zu bringen.

Der Vollständigkeit halber sei noch erwähnt, daß die Plombe 19 den Sockelabschnitt 6 des Drehwertgebers 2 weitgehend abdeckt und durch lediglich Aufstecken selbstsichernd montierbar ist. Dabei ist das Aufstecken auf den Sechskant 7 durch die erforderliche Ausformkonizität sowie Freisparungen 53, 54, 55, 56 erleichtert. Die Freisparungen 53, 54, 55, 56 sind außerdem dafür vorgesehen, daß die Plombe 19 auch dann Anwendung finden kann, wenn der Drehwertgeber 2 in Winkeln oder engen Nischen des Getriebegehäuses montiert ist. Eine mit 57 bezeichnete Lasche ist für das Anbringen einer Kennzeichnung vorgesehen.

## Patentansprüche

1. Plombe für einen Drehwertgeber mit einem im wesentlichen stabförmigen Schutzgehäuse, an welchem für ein Anbringen des Drehwertgebers am Getriebegehäuse eines Fahrzeuges eine Flanschfläche und Schraubverbindungsmittel ausgebildet sind, wobei die Flanschfläche das Schutzgehäuse in einen Sensorabschnitt und einen Sockelabschnitt teilt und der Sockelabschnitt mit einem dem Ansetzen eines Schraubwerkzeuges dienenden, gegenüber der Flanschfläche abgesetzten Sechskant versehen ist
**dadurch gekennzeichnet,**
**daß** die Plombe (19) als Sechskanthülse derart aus Kunststoff geformt ist,
**daß** sie im wesentlichen formschlüssig mit dem Sechskant (7) des Schutzgehäuses (3) verbindbar ist und
**daß** an wenigstens einem Wandelement (20, 21) der Plombe (19) ein der Stirnfläche (26) des Sechskantes (7), die in Richtung des Sensorabschnittes (5) des Schutzgehäuses (3) weist, zugeordnetes primäres Rastelement (22, 23, 24, 25) ausgebildet ist.

2. Plombe nach Anspruch 1,
**dadurch gekennzeichnet,**
**daß** zwei sich parallel gegenüberliegende Wandelemente (20, 21) und wenigstens zwei weitere sich parallel gegenüberliegende Wandelemente (27, 30 bzw. 28, 29) quer zur Plombenachse federungsfähig in Verbindung stehen.

3. Plombe nach Anspruch 2,
**dadurch gekennzeichnet,**
**daß** an den Verschneidungskanten der nicht federungsfähig miteinander verbundenen Wandelemente (27, 29 und 28, 30) Rippen (47 und 48) ausgebildet sind.

4. Plombe nach Anspruch 1,
**dadurch gekennzeichnet,**
**daß** an den Wandelementen (20, 21, 27, 28, 29, 30) quer zur Plombenachse nach außen weisende, zungenförmige Vorsprünge (41, 42, 43, 44, 45, 46) angeformt sind.

5. Plombe nach Anspruch 1,
**dadurch gekennzeichnet,**
**daß** stirnseitig wenigstens teilweise ein Kragen (39, 40) vorgesehen ist.

6. Plombe nach Anspruch 1,
**dadurch gekennzeichnet,**
**daß** wenigstens ein sekundäres Rastelement (49, 50, 51, 52) vorgesehen ist und
**daß** das sekundäre Rastelement (49, 50, 51, 52) axial gegenüber den primären Rastelementen (22, 23, 24, 25) versetzt und an einem Wandelement (20, 21, 27, 28, 29, 30) ausgebildet ist, an dem primäre Rastelemente (22, 23, 24, 25) nicht ausgebildet sind.

## Claims

1. Seal for a rotational speed sensor having an essentially rod-shaped protective housing on which a flange facing and screw connecting means are formed for fitting the rotational speed sensor on the gearbox housing of a vehicle, the flange facing dividing the protective housing into a sensor section and a base section, and the base section being provided with a hexagon which serves for the fitting of a screwdriver or spanner and is offset in relation to the flange facing, **characterized in that** the seal (19) is formed from plastic as a hexagon sleeve in such a manner that it can be connected essentially in a form-fitting manner to the hexagon (7) of the protective housing (3), and **in that** a primary latching element (22, 23, 24, 25) which is assigned to the end surface (26) of the hexagon (7), which surface faces in the direction of the sensor section (5) of the protective housing (3), is formed on at least one wall element (20, 21) of the seal (19).

2. Seal according to Claim 1, **characterized in that** two opposite parallel wall elements (20, 21) and at least two further opposite parallel wall elements (27, 30 and 28, 29) are connected in a manner capable of resilience transversely with respect to the axis of the seal.

3. Seal according to Claim 2, **characterized in that** ribs (47 and 48) are formed on the intersecting edges of the wall elements (27, 29 and 28, 30) which are not connected to each other in a manner capable of resilience.

4. Seal according to Claim 1, **characterized in that** outwardly pointing, tongue-shaped projections (41, 42, 43, 44, 45, 46) are integrally formed on the wall elements (20, 21, 27, 28, 29, 30) transversely with respect to the axis of the seal.

5. Seal according to Claim 1, **characterized in that** a collar (39, 40) is provided on at least part of the end side.

6. Seal according to Claim 1, **characterized in that** at least one secondary latching element (49, 50, 51, 52) is provided, and **in that** the secondary latching element (49, 50, 51, 52) is offset axially with respect to the primary latching elements (22, 23, 24, 25) and is formed on a wall element (20, 21, 27, 28, 29, 30) on which primary latching elements (22, 23, 24, 25) are not formed.

## Revendications

1. Plomb pour un capteur de vitesse angulaire ayant un carter de protection essentiellement en forme de barre, sur lequel, en vue du montage du capteur de vitesse angulaire sur le carter de la boite de vitesse d'un véhicule automobile, sont prévus une face de bride et un moyen de raccordement vissé, la face de bride partageant le carter de protection en une partie capteur et une partie socle et la partie socle étant munie d'une tête à six pans, qui sert à la mise en place d'un outil à visser et qui est étagée par rapport à la face de bride,
**caractérisé par le fait**
**que** le plomb (19) est coulé en matière plastique avec une forme de douille à six pans,
**qu'**il peut être lié essentiellement par engagement positif avec la tête à six pans (7) du carter de protection (3) et
**qu'**il est prévu, sur au moins un élément de paroi (20, 21) du plomb (19), un élément primaire d'enclenchement (22, 23, 24, 25) qui correspond à la face frontale (26) de la tête à six pans (7), tournée vers la partie capteur (5) du carter de protection (3).

2. Plomb selon la revendication 1
**caractérisé par le fait**
**que** deux éléments parallèles de paroi qui se font face (20, 21) et, au moins, deux autres éléments parallèles de paroi se faisant face (27, 30 et, respectivement, 28, 29) sont reliés ensemble d'une façon élastique perpendiculairement à l'axe du plomb.

3. Plomb selon la revendication 2
**caractérisé par le fait**
**que** des nervures (47 et 48) sont formées sur les arêtes des éléments de paroi (27, 29 et 28, 30) reliés les uns aux autres d'une façon non élastique.

4. Plomb selon la revendication 1
**caractérisé par le fait**
**que** des saillies (41, 42, 43, 44, 45, 46) en forme de languettes tournées vers l'extérieur perpendiculairement à l'axe du plomb sont ménagées sur les éléments de parois (20, 21, 27, 28, 29, 30).

5. Plomb selon la revendication 1
**caractérisé par le fait**
**qu'**il est prévu, au moins partiellement, une collerette (39, 40) du côté frontal.

6. Plomb selon la revendication 1
**caractérisé par le fait**
**qu'**il est prévu au moins un élément d'enclenchement secondaire (49, 50, 51, 52) et
**que** l'élément d'enclenchement secondaire (49, 50, 51, 52) est décalé axialement par rapport aux éléments primaires d'enclenchement (22, 23, 24, 25) et est prévu sur un élément de paroi (20, 21, 27, 28, 29, 30) sur lequel des éléments primaires d'enclenchement (22, 23, 24, 25) ne sont pas prévus.
